Europäisches Patentamt

European Patent Office

Office européen des brevets

(19)

(11) Veröffentlichungsnummer: **0 102 029**

**A1**

(12) # EUROPÄISCHE PATENTANMELDUNG

(21) Anmeldenummer: **83108110.4**

(22) Anmeldetag: **17.08.83**

(51) Int. Cl.³: **C 04 B 21/02**

(30) Priorität: **27.08.82 DE 3231920**

(43) Veröffentlichungstag der Anmeldung:
**07.03.84 Patentblatt 84/10**

(84) Benannte Vertragsstaaten:
**DE FR GB IT NL**

(71) Anmelder: **Degussa Aktiengesellschaft
Weissfrauenstrasse 9
D-6000 Frankfurt am Main 1(DE)**

(72) Erfinder: **Heinemann, Wolfgang, Dr.Dipl.-Chem.
Stresemannstrasse 9
D-6450 Hanau(DE)**

(54) Verfahren zur Herstellung von Formkörpern aus keramischen Massen.

(57) Es wird die Herstellung von Formkörpern aus keramischen Massen beschrieben, die eine verringerte Dichte gegen-über der Ausgangsdichte der keramischen Massen aufweisen. Dazu werden die pulverförmigen keramischen Massen mit Schaumstoffe bildenden organischen Verbindungen und gegebenenfalls Blähmitteln versetzt und zu Formkörpern geformt.

EP 0 102 029 A1

0102029

82 166 KF

**D e g u s s a   Aktiengesellschaft**

6000 Frankfurt am Main, Weissfrauenstraße 9

Verfahren zur Herstellung von Formkörpern
aus keramischen Massen

Die Erfindung betrifft ein Verfahren zur Herstellung von
Formkörpern beliebiger Gestalt aus keramischen Massen mit
verringerter Dichte gegenüber der Ausgangsdichte der keramischen Massen. Zu diesen Formkörpern gehören auch Agglomerate.

Formkörper und Agglomerate aus keramischen Massen finden
für viele Anwendungszwecke Verwendung, beispielsweise als
Katalysatorträger, Wärmeisolierkörper oder Glasuren. Sie
werden vielfach aus pulverförmigen, oft feingemahlenen
Ausgangsstoffen hergestellt.

Üblicherweise wird bei der Agglomerierung von pulverförmigen keramischen Massen zu Granalien oder Pellets bei
der Verwendung der bekannten Bindemittel die Schüttdichte
deutlich erhöht, weil die Packungsdichte der Teilchen zunimmt. Das gleiche gilt auch für die Herstellung entsprechender sonstiger Formkörper. Diese Zunahme der
Schütt- und Packungsdichte beim Herstellen von Formkörpern aus keramischen Massen ist jedoch oft unerwünscht.

Es war daher Aufgabe der vorliegenden Erfindung, ein Verfahren zur Herstellung von Formkörpern beliebiger Gestalt
aus keramischen Massen mit verringerter Dichte gegenüber
der Ausgangsdichte der keramischen Massen zu schaffen.

Diese Aufgabe wurde erfindungsgemäß dadurch gelöst, daß die keramischen Massen oder deren Ausgangsprodukte mit Schaumstoffe bildenden organischen Verbindungen und gegebenenfalls Blähmitteln versetzt und zu Formkörpern geformt werden. Die Schaumbildung läuft entweder spontan beim Zusammenmischen der Komponenten ab oder kann auf bekannte Weise von außen ausgelöst werden. Besondere Blähmittel sind nur erforderlich, wenn die Komponenten der schaumstoffbildenden Verbindungen nicht von selbst unter Gasbildung miteinander reagieren.

Die so hergestellten Formkörper besitzen je nach Menge der zugesetzten schaumstoffbildenden Verbindungen eine mehr oder weniger verminderte Dichte gegenüber der Dichte der Ausgangsdichte der keramischen Massen und gegenüber der Dichte von nach bekannten Verfahren erzeugten Formkörpern. Vorteilhafterweise enthalten diese Formkörper, die beispielsweise in Form von Agglomeraten, Kugeln oder Blöcken vorliegen können, 5 bis 75 Gew.% organische Bestandteile. Ihre Formgebung erfolgt beispielsweise durch Pressen, Gießen oder Walzen.

Als Schaumstoffe können unter anderem Polystyrole, Phenolharze, Polyamide, Polyvinylchloride, Polycarbonate, Polyolefine oder Harnstoffharze dienen. Zur Agglomeration bzw. Ausbildung der Formkörper werden die keramischen Massen bzw. deren Ausgangsprodukte mit den Monomeren dieser Kunststoffe bzw. bei Polykondensations- und Polyadditionsprodukten mit den Ausgangskomponenten versetzt und geformt, wobei gegebenenfalls noch bekannte Blähmittel zugesetzt werden müssen. Vorzugsweise erfolgt die Auslösung der Schaumstoffbildung bereits während der Formgebung, jedoch ist in Sonderfällen die Schaumstoffbildung auch im geformten Körper möglich.

Als besonders vorteilhaft hat es sich herausgestellt, die keramischen Massen mit den erforderlichen Komponenten zur Bildung eines Polyurethanschaums zu versetzen, nämlich mit Polyisocyanaten (Di- und Tri-isocyanaten) und Polyolen oder sonstigen Verbindungen mit aktiven Wasserstoffatomen, wie Wasser, Aminen, Amiden oder Carbonsäuren. Vorzugsweise werden die pulverförmigen Ausgangsstoffe zunächst mit der einen Komponente, z. B. einem Diisocyanat, agglomeriert und dann bei dem Aufbau des Formkörpers mit der anderen Komponente, beispielsweise einem Diol, versetzt. Normalerweise setzt man die beiden Komponenten gemäß ihren Anteilen an funktionellen Gruppen zu. Als Polyisocyanate haben sich vor allem Toluylendiisocyanat und Diphenylmethandiisocyanat bewährt, als Polyole Äthylenglycol, Propylenglycol, Butandiol-1,4 und Hexandiol-1,6.

In vielen Fällen ist es auch vorteilhaft, die organischen Bestandteile nach der Aushärtung wieder aus dem keramischen Formkörper durch eine thermische Nachbehandlung zu entfernen. Dabei tritt beispielsweise eine Depolymerisation ein und die Depolymerisationsprodukte dampfen ab, so daß der verbleibende Formkörper eine offenporige Struktur erhält.

Folgende Beispiele sollen das erfindungsgemäße Verfahren näher erläutern:

Beispiel 1

In einem Mischer wird eine Pulvermischung hergestellt, die zu 80 % aus feingemahlenem Glas (Körnung $< 50 \mu$m) und zu 20 % aus pulverförmigem Sprühton besteht. Zur Agglomeration werden zu 100 Gew.-Teilen Trockensubstanz und 6 Gew.-Teile Toluylendiisocyanat zugesetzt. Die Agglomerierung wird beendet, wenn das Aufbaugranulat eine Körnung von 1 bis 2 mm erreicht hat. Anschließend wird Äthylenglycol als Polyol in einer Menge zugesetzt, daß die Zahl der freien OH-Gruppen der Zahl der funktionellen Isocyanatgruppen äquivalent ist. Nach kurzem Untermischen des Polyols tritt ein durch ein weiterhin zugesetztes Amin katalysierter Polymerisationsprozess ein, der gewöhnlich innerhalb von 20 Minuten abgeschlossen ist. Das Produkt verfestigt sich zu einem Block mit einer Schaumstruktur. Das Litergewicht ist, bezogen auf die pulverförmige Ausgangsmischung, für die o.g. Mengen von Zusatzstoffen um 30 bis 35 % reduziert. Während des Aushärteprozesses kann die Masse zur gewünschten Endform (Bänder, Kugeln, Blöcke) geformt werden.

Beispiel 2

Zu 100 Gew.-Teilen einer feindispersen Kieselsäure oder Aluminiumoxid werden 40 Gew.-Teile eines Diphenylmethandiisocyanats zugegeben. Im Mischer wird das Isocyanat eingearbeitet und eine Voragglomerierung durchgeführt. Das Gemenge wird auf einen Granulierteller abgelassen. Auf das in den Granulierteller einlaufende Produkt wird eine äquivalente Menge Propylenglycol aufgesprüht. Beim Aufbau der Pellets findet unter Aufschäumen die Aushärtung statt. Die mittlere Verweilzeit der Pellets auf dem Teller kann mit den üblichen Handhabungen der Pelletiergeräte so gesteuert werden, daß die abgeworfenen Pellets ausgehärtet sind.

0102029

82 166 KF

D e g u s s a    Aktiengesellschaft

6000 Frankfurt am Main, Weissfrauenstraße 9

Patentansprüche

1.. Verfahren zur Herstellung von Formkörpern beliebiger Gestalt aus keramischen Massen mit verringerter Dichte gegenüber der Ausgangsdichte der keramischen Massen, dadurch gekennzeichnet, daß die keramischen Massen oder deren Ausgangsprodukte mit Schaumstoffe bildenden organischen Verbindungen und gegebenenfalls Blähmitteln versetzt und zu Formkörpern geformt werden.

2. Verfahren zur Herstellung von Formkörpern nach Anspruch 1, dadurch gekennzeichnet, daß während der Formgebung die Schaumstoffbildung ausgelöst wird.

3. Verfahren zur Herstellung von Formkörpern nach Anspruch 1 und 2, dadurch gekennzeichnet, daß die Formkörper 5 bis 75 Gew.% organische Bestandteile enthalten.

4. Verfahren zur Herstellung von Formkörpern nach Anspruch 1 bis 3, dadurch gekennzeichnet, daß die keramischen Massen zur Bildung von geschäumten Polyurethanen mit Polyisocyanaten und Polyolen oder anderen Verbindungen mit aktiven Wasserstoffatomen versetzt werden.

0102029

5. Verfahren zur Herstellung von Formkörpern nach Anspruch 1 bis 4, <u>dadurch gekennzeichnet</u>, daß durch eine thermische Nachbehandlung die organischen Bestandteile aus den Formkörpern entfernt werden.

**0102029**

Nummer der Anmeldung

EP 83 10 8110

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | CHEMICAL ABSTRACTS, Band 66, 1967, Seiten 9890-9891, Nr. 105579m, Columbus, Ohio, USA & CS - A - 119 009 (F. SEVCIK et al.) 15.07.1966 * Zusammenfassung * | 1-5 | C 04 B 21/02 |
| X,Y | CHEMICAL ABSTRACTS, Band 85, 1976, Seite 56, Nr. 6741u, Columbus, Ohio, USA & JP - A - 76 30298 (MITSUBOSHI BELTING LTD.) 15.03.1976 * Zusammenfassung * | 1-5 | |
| X | GB-A-1 501 115 (UNITED KINGDOM ATOMIC ENERGY AUTHORITY) * Anspruch 1 * | 1 | |
| X | DE-A-1 964 000 (OTSUKA KAGAKU YAKUHIN K.K.) * Anspruch 1 * | 1 | RECHERCHIERTE SACHGEBIETE (Int. Cl. ³) C 04 B |

Der vorliegende Recherchenbericht wurde für alle Patentansprüche erstellt.

| Recherchenort DEN HAAG | Abschlußdatum der Recherche 16-11-1983 | Prüfer STANGE R.L.H |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03.82